# EUROPEAN PATENT APPLICATION

(11) **EP 4 838 929 A1**
(43) Date of publication of application: **11.11.2026**
(21) Application number: 25175100.4
(22) Date of filing: 08.05.2025
(51) Int. Cl.: H04W 12/50, H04W 4/02, H04W 4/48, H04W 4/80, H04W 76/10, H04W 76/14, H04W 76/20

(54) **A METHOD FOR MANAGING BLUETOOTH CONNECTIONS IN A VEHICLE, SYSTEMS FOR MANAGING BLUETOOTH CONNECTIONS IN A VEHICLE AND A VEHICLE**

(71) Applicant: Bayerische Motoren Werke Aktiengesellschaft, 80809 München (DE)
(72) Inventor: Hyun, Jungjo, 93077 Bad Abbach (DE); Schorp, Konstantin, 80995 München (DE)

(57) **Abstract**

Embodiments of the present invention provide a method 100 for managing Bluetooth connections in a vehicle comprising a plurality of Bluetooth control units. The method comprise providing 110 a unified Bluetooth address for the plurality of Bluetooth control units in the vehicle, wherein each of the plurality of Bluetooth control units in the vehicle is assigned to a display device in the vehicle. The method 100 further comprises receiving 120 a connection request from an external Bluetooth device for establishing a connection with a first display device in the vehicle by a user. The method 100 further comprises establishing 130 a Bluetooth connection between the external Bluetooth device and one of the plurality of Bluetooth control units using the unified Bluetooth address. The method 100 further comprises transmitting 140 data between the first display device and the external Bluetooth device via the connected Bluetooth control unit.

## Description

Embodiments of the present disclosure relate to a method for managing Bluetooth connections in a vehicle, systems for managing Bluetooth connections in a vehicle and vehicle.

Vehicles may include multiple vehicle control units, each equipped with its own communication interfaces, including Bluetooth control units. Wireless communication between external devices, such as smartphones or headphones, and the vehicle may take place via Bluetooth. Furthermore, vehicles may include several display devices, each assigned to a specific control unit. When an external Bluetooth device is used in conjunction with a display device, a unique association with a particular Bluetooth control unit may be required. The control and presentation of Bluetooth-related functions may also depend on the user's position within the vehicle, for instance, when changing seats. Existing systems, however, may be limited in terms of flexibility and user convenience. Existing systems may require re-pairing or re-connecting an external device when switching between display devices or user positions.

Therefore, there is a need to provide an improved technique for managing Bluetooth connections in a vehicle. This need is met by the method, system and the vehicle according to the independent claims.

This need is addressed by the method, the device, the computer program, and the vehicle as defined in the independent claims.

Embodiments relate to a method for managing Bluetooth connections in a vehicle comprising a plurality of Bluetooth control units (also referred to as Bluetooth control units). The method comprises providing a unified Bluetooth address for the plurality of Bluetooth control units in the vehicle. Each of the plurality of Bluetooth control units in the vehicle is assigned to a display device in the vehicle. The method further comprises receiving a connection request from an external Bluetooth device for establishing a connection with a first display device in the vehicle by a user. The method also comprises establishing a Bluetooth connection between the external Bluetooth device and one of the plurality of Bluetooth control units using the unified Bluetooth address. The method comprises transmitting data between the first display device and the external Bluetooth device via the connected Bluetooth control unit.

This method allows seamless management of Bluetooth connections across multiple vehicle control units within a vehicle. By using a unified Bluetooth address, the external device perceives the vehicle as a single Bluetooth entity, regardless of the physical number of Bluetooth control units. This simplifies the user experience and avoids the need for repeated pairing when moving between different display units or areas within the vehicle. Furthermore, the system allows the connected control unit to route data appropriately to the assigned display device, ensuring a consistent and responsive interface for the user.

**In** one embodiment, the method may further comprise receiving a connection request from the external Bluetooth device to switch from the first display device to using a second display device by the user. The method may also comprise transmitting data between the second display device and the external Bluetooth device via the connected Bluetooth control unit. This enables flexible user interaction, allowing the output or control of a Bluetooth-connected device to be shifted to another display within the vehicle, without the need to re-establish the Bluetooth connection.

**In** one embodiment, the method may further comprise detecting a change in the seating position of the user in the vehicle. The initial seating position may be assigned to the first display device. The method may further comprise determining a second display device assigned to the new seating position of the user. Data may then be transmitted between the second display device and the external Bluetooth device via the connected Bluetooth control unit. This allows the vehicle system to adapt dynamically to user movement and ensures that the control or display context for the Bluetooth device follows the user, improving comfort and usability.

In one embodiment, the method may further comprise exchanging control information among the plurality of Bluetooth control units. The Bluetooth control units may be coordinated based on the exchanged control information. This enables distributed decision-making and system-wide awareness, ensuring coherent management of Bluetooth sessions across all relevant Bluetooth control units in the vehicle.

In one embodiment, the control information may be exchanged among the plurality of Bluetooth control units via a TCP/IP-based communication network within the vehicle. This allows standardized and scalable communication between control units, which can be particularly advantageous in vehicles with modular or service-oriented architectures. This may be used in an example, where multiple vehicle control units are used within a vehicle.

In one embodiment, the method may further comprise storing connection information of the external Bluetooth device in a data structure. The data structure may be updated when the connection status of the external Bluetooth device changes. The connection information stored in the data structure may be provided for managing the Bluetooth connection within the vehicle system. This enables persistent and centralized tracking of connection-related parameters, which can support seamless session continuity and facilitate load balancing or context adaptation.

In one embodiment, the connection information may comprise at least one of the following: a unique device address, a link key for authentication of the connection, an index for internal assignment of the external Bluetooth device, a device name for identifying the external Bluetooth device, the activated Bluetooth profiles of the external Bluetooth device, the currently assigned display device of the external Bluetooth device, or the current connection status of the external Bluetooth device. By maintaining detailed connection metadata, the system can manage reconnections, user preferences, and device capabilities more efficiently, improving robustness and usability.

In one embodiment, the method may further comprise selecting a Bluetooth control unit from the plurality of Bluetooth control units for establishing a connection with the external Bluetooth device based on operating parameters of the plurality of Bluetooth control units. This enables intelligent distribution of connection load and optimization of system resources across multiple Bluetooth interfaces in the vehicle.

In one embodiment, the selection of the Bluetooth control unit may be based on at least one of the following operating parameters: selecting the Bluetooth control unit with the lowest number of connected external Bluetooth devices; selecting the Bluetooth control unit with the lowest current data transmission rate; selecting the Bluetooth control unit with the lowest processor load; or selecting a Bluetooth control unit located in physical proximity to the display device being used. The adaptive selection criteria enable fine-grained and context-aware control over Bluetooth connectivity, improving performance and user experience.

In one embodiment, the method may further comprise monitoring operating parameters of the plurality of Bluetooth control units and switching an external Bluetooth device from a first Bluetooth control unit to a second Bluetooth control unit based on the operating parameters of the plurality of Bluetooth control units. This allows dynamic reallocation of Bluetooth connections in response to load changes or hardware conditions, maintaining service quality across the system.

In one embodiment, the external Bluetooth device may be switched from the first Bluetooth control unit to the second Bluetooth control unit if at least one of the following operating parameters is met: the number of external devices connected to the first Bluetooth control unit exceeds a predefined threshold; the current data transmission rate of the first Bluetooth control unit reaches a defined maximum capacity; the processor load of the first Bluetooth control unit exceeds a predefined limit; or the second Bluetooth control unit has a lower load than the first Bluetooth control unit. This ensures efficient load balancing and avoids performance degradation on overloaded Bluetooth control units.

Embodiments further relate to a system for managing Bluetooth connections in a vehicle comprising a plurality of Bluetooth control units. The system comprises a plurality of Bluetooth control units. The system further comprises a processor circuit configured to provide a unified Bluetooth address for the plurality of Bluetooth control units in the vehicle. Each of the plurality of Bluetooth control units in the vehicle is assigned to a display device in the vehicle. The processor circuit is further configured to receive a connection request from an external Bluetooth device for establishing a connection with a first display device in the vehicle by a user. The processor circuit is additionally configured to establish a Bluetooth connection between the external Bluetooth device and one of the plurality of Bluetooth control units using the unified Bluetooth address. Furthermore, the processor circuit is configured to transmit data between the first display device and the external Bluetooth device via the connected Bluetooth control unit.

This configuration enables a centralized processing architecture within a single processor (such as an ECU) that houses multiple Bluetooth control units. The system simplifies integration and coordination by handling all logic in one processing environment. It can reduce inter-ECU latency and eliminates the need for inter-ECU communication protocols like TCP/IP for synchronization. It also facilitates more efficient resource sharing between Bluetooth control units, while maintaining a unified external Bluetooth identity. Further, it may advance cyber security because there might be no private data exchanged, such as a link key, between vehicle control units.

Embodiments further relate to a system for managing Bluetooth connections in a vehicle comprising a plurality of Bluetooth control units. The system comprises a plurality of Bluetooth control units. The system further comprises a plurality of processor circuits. A first processor circuit is configured to provide a unified Bluetooth address for the plurality of Bluetooth control units in the vehicle. Each of the plurality of Bluetooth control units in the vehicle is assigned to a display device in the vehicle. A second processor circuit is configured to receive a connection request from an external Bluetooth device for establishing a connection with a second display device in the vehicle by a user. The second processor circuit is further configured to establish a Bluetooth connection between the external Bluetooth device and a second Bluetooth control unit using the unified Bluetooth address. Furthermore, the second processor circuit is configured to transmit data between the second display device and the external Bluetooth device via the connected second Bluetooth control unit.

This architecture allows for a distributed system with multiple ECUs, each handling its own Bluetooth control unit and processing tasks. It supports modular vehicle platforms and ECU separation by functionality. The system can maintain a consistent external Bluetooth identity despite having physically and logically distributed processing units. Synchronization between ECUs enables consistent connection handling, load balancing, and flexible user interaction across the vehicle.

Embodiments further relate to a vehicle comprising the system or the system described above.
Fig. 1 schematically illustrates a method for managing Bluetooth connections in a vehicle comprising a plurality of Bluetooth control units;
Fig. 2 schematically illustrates a system for managing Bluetooth connections in a vehicle comprising a plurality of Bluetooth control units;
Fig. 3 schematically illustrates a system for managing Bluetooth connections in a vehicle comprising a plurality of Bluetooth control units;
Fig. 4 illustrates schematically a vehicle comprising system for managing Bluetooth connections in a vehicle comprising a plurality of Bluetooth control units;
Fig. 5 illustrates schematically a vehicle comprising system for managing Bluetooth connections in a vehicle comprising a plurality of Bluetooth control units;
Fig. 6 illustrates a system architecture for managing Bluetooth connections in a vehicle, comprising a host system and a controller chipset;
Fig. 7 illustrates a vehicle managing Bluetooth connections using a single vehicle control unit;
Fig. 8 illustrates a flow diagram for managing Bluetooth connections using a single vehicle control unit or multiple vehicle control units;
Fig. 9 illustrates a lookup table for managing Bluetooth connection information within a vehicle system;
Fig. 10 illustrates a vehicle system comprising a plurality of distributed vehicle control units, each including at least one Bluetooth control unit and corresponding processing stack for managing Bluetooth connections;
Fig. 11 illustrates a flow diagram corresponding to the multi-ECU Bluetooth system of Fig. 10;
Fig. 12 illustrates an example of a graphical user interface displayed on a central vehicle display, such as a Central Information Display (CID), for assigning Bluetooth-connected devices to one of several available display devices in the vehicle; and
Fig. 13 illustrates a device management interface presented to the user, for example on the Central Information Display (CID) or any other in-vehicle screen.

Various embodiments are described in more detail below with reference to the accompanying drawings, in which certain embodiments are illustrated. In the figures, the thicknesses of lines, layers, and/or regions may be exaggerated for clarity.

In existing systems, each Bluetooth control unit may be assigned to its own fixed Bluetooth address, which results in each Bluetooth control unit being recognized as a separate Bluetooth control unit . In existing systems when a vehicle comprises a plurality of Bluetooth control unit s, external devices such as smartphones may pair individually with each Bluetooth control unit depending on which display is being accessed. This may create a fragmented user experience and may require repeated pairing processes when switching between seats or displays, especially in rear-seat entertainment environments or multi-user contexts.

BMW IVI systems may consist of multiple display units, such as namely CID (Central Infotainment Display), CDE (Co-Driver Entertainment), and RSE (Rear Seat Entertainment). These may include multiple Bluetooth control unit s either in each ECU or centrally integrated in one ECU (e.g., CID) in high-integration architectures. In existing systems, a user may manually disconnect and reconnect a Bluetooth device such as a smartphone whenever switching seats or changing the associated display. This results in a repeated and inconvenient pairing process each time a user wishes to access their device from a different display. The underlying reason lies in the conventional design of Bluetooth stacks within automotive OS platforms such as AOSP or Linux, which may support only a single Bluetooth control unit per stack and lack any native concept for unified multi-controller pairing.

The disclosed technique may implement a unified Bluetooth pairing architecture across multiple Bluetooth control units. This may enable multiple physical Bluetooth control units to act as a single logical Bluetooth unit, using a unified Bluetooth address (BT _ADDR). A software component on the host side may manage the routing of Bluetooth packets and maintains connection metadata in a centralized lookup table. This allows a user to pair their Bluetooth device only once with the vehicle, regardless of which display or ECU (e.g., HU, CDE, or RSE) they interact with. The technique may apply equally to single-ECU high-integration setups and distributed multi-ECU architectures, enabling a seamless user experience and dynamic Bluetooth control unit assignment without requiring device re-pairing or user intervention.

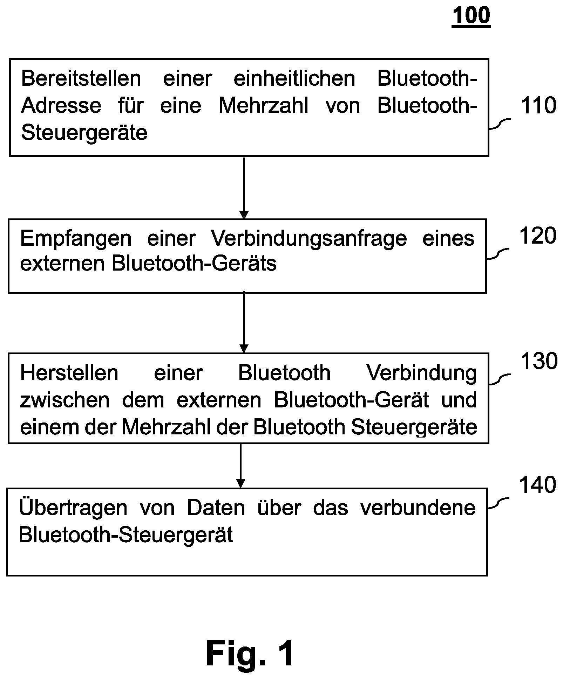

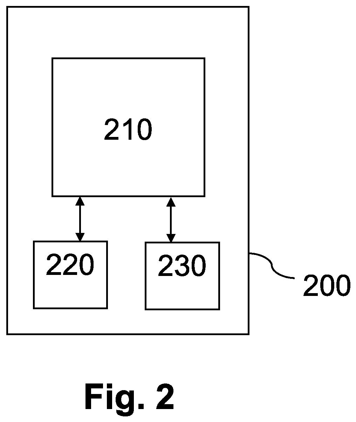

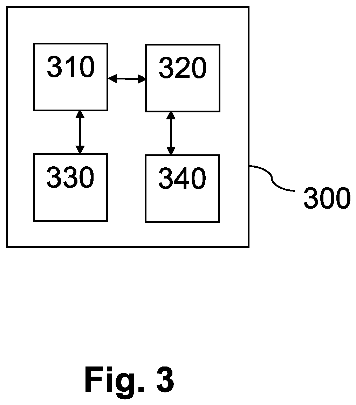

**Fig. 1** schematically illustrates a method 100 for managing Bluetooth connections in a vehicle comprising a plurality of Bluetooth control units. In some examples, the vehicle may comprise a plurality of vehicle control units (such as electronic control units (ECUs)), comprising the plurality of Bluetooth control units, for example each control unit comprising one or more Bluetooth control units. For example, one of the plurality of Bluetooth control units of the vehicle may be referred to as the head unit. The head unit may coordinate the operation of the remaining Bluetooth control units by distributing control information, synchronizing connection states, and managing the unified Bluetooth address across the distributed system. In some examples, the vehicle may comprise a single control unit comprising the plurality of control units. For example, the single control unit may be referred to as the head unit. In some examples, the method 100 may be performed by a system in which a single control unit (such as an electron control unit (ECU)) comprises the plurality of Bluetooth control units. In such a configuration, the control unit may comprise a shared processor circuit that is configured to control the overall behavior of the Bluetooth connection management (see Fig. 2 below). In some examples, the method 100 may be executed by a system comprising multiple vehicle control units, each having its own one or more Bluetooth control units and associated processor circuitry. In this distributed setup, the individual electronic control units may operate independently but cooperate to maintain the unified Bluetooth address presented to external devices (see Fig. 3 below).

The method 100 comprises providing 110 a unified Bluetooth address for the plurality of Bluetooth control units in the vehicle. Each of the plurality of Bluetooth control units in the vehicle is assigned to a display device in the vehicle. In some examples, the vehicle may include multiple display devices distributed across different seating positions or functional zones, such as a central head unit, co-driver entertainment displays, and rear seat entertainment displays. Each of these display devices may support user interaction and may offer Bluetooth-related functions, such as media playback, call handling, or device mirroring. To support these features, each display device may be associated with a Bluetooth control unit of the plurality of Bluetooth control units that handles the wireless communication with external Bluetooth devices. This association between display devices and Bluetooth control units may be implemented by each display device being served by its own control unit that includes a dedicated Bluetooth control unit. In this case, the Bluetooth communication is handled locally and independently per display, with inter-unit coordination managed over a vehicle network. In another example, a single control unit comprising the plurality of Bluetooth control units may serve multiple display devices while including a dedicated Bluetooth control unit for each display device. In both configurations, the logical assignment of Bluetooth control units to display devices ensures that user interactions on a specific display device are correctly mapped to the corresponding Bluetooth communication path.

In some examples, the unified Bluetooth address for the plurality of Bluetooth control units in the vehicle may refer to a single, globally unique Bluetooth device address that is shared among all Bluetooth control units for external communication. The unified Bluetooth address may be a 48-bit identifier typically represented in hexadecimal format (e.g., 00:1A:7D:DA:71:13) and may be assigned in accordance with the IEEE 802 standard. The unified Bluetooth address may be dynamically configured or virtually emulated so that each Bluetooth control unit, regardless of its physical implementation, uses the same address when interacting with external Bluetooth devices. By presenting the same Bluetooth address across all Bluetooth control units, the vehicle may appear to external Bluetooth devices as a single logical Bluetooth endpoint, independent of how many physical Bluetooth control units are active internally. This may be realized by configuring the Bluetooth control unit stack to mask its hardware address and instead use the unified Bluetooth address during device discovery, pairing, and connection procedures.

In some examples, the unified Bluetooth address may be implemented by assigning the same logical Bluetooth address to all Bluetooth control units in the vehicle, either by synchronizing the unified Bluetooth address across multiple hardware Bluetooth control units or by having one primary Bluetooth control unit actively communicate with the external device while other Bluetooth control units are synchronized and capable of taking over seamlessly. The unified Bluetooth address may be distributed and managed by a software component, such as a virtual machine or coordination service, that maintains a consistent connection state and routes Bluetooth communication to the appropriate Bluetooth control unit. This enables seamless transitions and dynamic assignment of Bluetooth control responsibilities without requiring the external device to re-pair or recognize a new address.

The method 100 further comprises receiving 120 a connection request from an external Bluetooth device for establishing a connection with a first display device in the vehicle by a user. In some examples, the external Bluetooth device may refer to any Bluetooth-enabled electronic device that intended to wirelessly interact with the vehicle. For example, the external device might not be part of the vehicle. The external Bluetooth device may be carried or operated by a user and may support Bluetooth communication profiles such as Advanced Audio Distribution Profile (A2DP), Hands-Free Profile (HFP), Phone Book Access Profile (PBAP), or Human Interface Device Profile (HID). For example, the external Bluetooth device may be smartphone, tablet, wireless headphone, smartwatch, or portable media player. The external Bluetooth device may initiate a connection to access services provided through a display device in the vehicle, such as audio playback, call handling, or data exchange.

In some examples, an advertising mode of a Bluetooth control unit may be an operational state in which the Bluetooth control unit periodically broadcasts identification and capability information to nearby external Bluetooth devices. For example, for pairing process, when the user enters a device management menu in the vehicle control unit (such as the head unit) to add new device, a Bluetooth control unit may broadcast an advertising message to find devices that may be paired in when the external device is also in the pairing mode. This broadcasting allows the Bluetooth control unit to be discovered during the Bluetooth device scanning process. The advertising packets may contain the unified Bluetooth address, device name, and supported Bluetooth profiles. Only one of the plurality of Bluetooth control units in the vehicle may be in advertising mode at a given time to ensure that external Bluetooth devices perceive the vehicle as a single logical Bluetooth device. Once a connection request is received, the connection may be established using the advertised unified Bluetooth address, regardless of which physical Bluetooth control unit receives the request.

In some examples, the Bluetooth control unit assigned to the head unit may be selected to enter advertising mode, particularly when the head unit acts as the coordinating control unit. In other examples, the Bluetooth control unit assigned to the display device that the user intends to connect with may enter advertising mode, for example based on the user's proximity, interaction context, or usage history. The decision as to which Bluetooth control unit advertises may be based on predefined logic, dynamic system state, or user behavior, and may be managed by a processor circuit or coordination logic in the vehicle. This may be independent of whether the Bluetooth control units are implemented within a single control unit or distributed across multiple vehicle control units.

When an external Bluetooth device discovers the vehicle through the advertising packets and initiates a connection, a connection request is transmitted to the Bluetooth control unit currently in advertising mode. This request may include device discovery information, service inquiry, and security parameters such as authentication procedures or encryption setup.

The method 100 further comprises establishing a Bluetooth connection between the external Bluetooth device and one of the plurality of Bluetooth control units using the unified Bluetooth address. Establishing the Bluetooth connection may comprise performing a Bluetooth protocol-level link setup, such as initiating the paging procedure, completing authentication using link key exchange, and configuring encryption. Additionally, a profile-level connection may be established, such as for audio streaming (A2DP), hands-free calling (HFP), or data exchange (PBAP). The connection may be established using the unified Bluetooth address, so that the external Bluetooth device interacts with the vehicle as if it were a single Bluetooth device, even though internally a specific Bluetooth control unit is handling the communication.

In some examples, the Bluetooth control unit that is assigned to the head unit may receive the connection request and proceed with establishing the Bluetooth connection. This may be the case when the head unit serves as the default or coordinating control unit in the vehicle system. The head unit may manage not only the initial connection process but also further communication routing, user authentication, and service registration. The head unit may act as the centralized vehicle control unit for Bluetooth session management and may also maintain system-wide information such as connection status, profile activations, or user preferences. In other examples, the Bluetooth control unit that is assigned to the display device the user intends to interact with may directly establish the Bluetooth connection. For instance, when that Bluetooth control unit was the one in advertising mode, or when the system dynamically redirects the connection after initial acceptance. The intended display device may be determined based on the user's action or system context and allow the associated Bluetooth control unit to complete the connection setup.

The method 100 further comprises transmitting 140 data between the first display device and the external Bluetooth device via the connected Bluetooth control unit. In some examples, transmitting data between the first display device and the external Bluetooth device via the connected Bluetooth control unit may comprise exchanging of application-level information, such as audio signals, control commands, or user interaction data, routed between the vehicle's user interface and the external Bluetooth device. The first display device may provide the visual interface or interaction point for the user, while the actual Bluetooth communication is handled by one of the plurality of Bluetooth control units. The data path may be logically established between the display device and the external Bluetooth device, but physically mediated by the connected Bluetooth control unit. This allows the user to, for example, stream media, initiate phone calls, or interact with apps from the display device using the wireless connection to the external Bluetooth device.

Importantly, the connected Bluetooth control unit handling the communication may not necessarily be the Bluetooth control unit assigned to the first display device. For example, the Bluetooth control unit of the head unit may have received the connection request and established the Bluetooth connection, while the user interacts with the rear seat display device. In this case, data between the external Bluetooth device and the rear seat display device is still routed through the Bluetooth control unit of the head unit. In some example, the Bluetooth control unit of the first display device may be assigned to manage the connection directly. This flexible mapping between display devices and Bluetooth control units allows dynamic load distribution, seamless user experience, and efficient use of available hardware resources, regardless of the fixed physical assignment between display devices and Bluetooth control units.

The above described technique enabled the vehicle to present a single, unified Bluetooth identity to external Bluetooth devices while internally managing multiple Bluetooth control units. By providing a unified Bluetooth address and controlling which Bluetooth control unit is in advertising mode, the vehicle ensures that external Bluetooth devices perceive it as one consistent entity. This allows seamless discovery and connection without requiring the user to differentiate between internal subsystems. The ability to dynamically select which Bluetooth control unit handles the connection, regardless of its physical assignment to a specific display device, provides flexibility and ensures that connections can be maintained or redirected based on system load, user context, or hardware availability. The above technique allows the Bluetooth connection to be logically associated with a selected display device, even if the physical communication is handled by a different Bluetooth control unit. This decoupling between display interface and Bluetooth transport enables seamless user experiences during handovers, display switches, or seat changes without requiring re-pairing or service interruption. It also supports more efficient resource utilization and coordinated control across distributed or centralized electronic control unit architectures, making the system adaptable to various vehicle platforms and configurations.

In some examples, the method 100 may further comprise exchanging control information among the plurality of Bluetooth control units. In some examples, control information may refer to system-level coordination data exchanged among the plurality of Bluetooth control units to manage roles, state synchronization, connection routing, and operational decisions within the vehicle's Bluetooth system. The Bluetooth control units may be coordinated based on the exchanged control information. For example, the control information exchanged may comprise the current connection state of each Bluetooth control unit, active role assignments, advertising status, and internal load indicators such as the number of connected devices or data throughput. This exchange may allow each Bluetooth control unit to be aware of the global system state, ensuring that the unified Bluetooth address is maintained consistently and that transitions between Bluetooth control units, such as during handover or load balancing (see below), may occur without loss of session or service interruption. For example, in the system (for example system 200, Fig. 2) comprising a single control unit that includes the plurality of Bluetooth control units, the exchange of control information may occur through shared memory or inter-process communication mechanisms managed by a common processor circuit. The processor circuit of the system may oversee synchronization by writing and reading connection parameters, user interaction states, and resource availability indicators between software modules assigned to each Bluetooth control unit. This may allow the control unit to dynamically decide which Bluetooth control unit should advertise, handle an incoming connection, or manage an active data stream. Coordination in this context may refer to scheduling access to shared hardware resources, reassigning control roles, or updating routing logic based on the system state.

### Display device reassignment

In some examples, the method 100 may further comprise receiving a connection request from the external Bluetooth device to switch from the first display device to using a second display device by the user. As described above each Bluetooth control unit in the vehicle may be logically or physically assigned to a specific display device. This assignment allows to organize which Bluetooth control unit may handle data routing for which display device. Display devices may, for example, the central head unit in the dashboard, a rear-seat entertainment (RSE) screen, or a co-driver touchscreen.

For example, the switch from one display device to another may be initiated through various forms of user interaction. This may include selecting the connected external Bluetooth device and assigning it to a different display device via a menu selection, a physical button, a spoken voice command, or a drag-and-drop gesture within the user interface. The drag-and-drop interaction may involve dragging a device icon from one display representation to another within a visual layout on the touchscreen. In addition to touch-based input, the system may also support alternative input modalities such as steering wheel controls, gesture-based systems, or remote controls. These interactions may be performed on any suitable display device in the vehicle, including a central infotainment unit, a front passenger display, or a rear seat entertainment screen. When such input is received, the system may interpret it as a connection reassignment request and update the internal mapping to associate the external Bluetooth device with the newly selected display device, while maintaining the existing Bluetooth connection

In a centralized setup, where a single control unit manages the plurality of Bluetooth control units (see Fig. 2), this request may be received directly by the processor circuit of the head unit, which interprets the input and updates the internal routing. In a distributed setup, where each display device is associated with its own control unit and one or more Bluetooth control units (see Fig. 3), the request may be detected locally and forwarded via the in-vehicle communication network (e.g., TCP/IP) to a coordination unit or the control unit currently handling the Bluetooth connection. In either case, the system interprets this as a logical reassignment of the display device for the ongoing connection.

For example, the external Bluetooth device may continue to be connected to the same Bluetooth control unit that was used before the display switch. For example, the method 100 may also comprise transmitting data between the second display device and the external Bluetooth device via the connected Bluetooth control unit. The system does not modify the physical Bluetooth connection but updates its internal routing so that the output or interaction data is directed to the new display device. This may involve passing control commands, media streams, or status information from the Bluetooth stack to the second display device via software interfaces or inter-process communication. For instance, if a user moves music playback control from the rear seat entertainment display to the head unit, the same Bluetooth control unit continues to handle the connection, while the user interface and control elements are shifted to the newly selected screen. Because the underlying Bluetooth control unit does not change, the system might not need to re-establish the Bluetooth link or perform any re-pairing. The unified Bluetooth address ensures that the external Bluetooth device perceives the vehicle as a single endpoint. As a result, the switch of the display device is performed entirely at the software layer, and the user experiences a seamless transition in control and content output without any interruption in connectivity.

In some examples, the user-initiated switch to a second display device is accompanied by a handover of the active Bluetooth connection from one Bluetooth control unit to a switched Bluetooth control unit. For example, the method 100 may also comprise transmitting data between the second display device and the external Bluetooth device via a switched Bluetooth control unit. This may be required when the second display is physically or logically associated with a different Bluetooth control unit, for instance when switching from a rear seat display handled by one control unit to a front seat display managed by another control. In response, the system may transfer the connection context, such as authentication credentials, device identifiers, and active profile states, from the first to the second Bluetooth control unit. The handover may be executed internally by the system and made possible by the unified Bluetooth address architecture. Because all Bluetooth control units advertise the same Bluetooth address, the external Bluetooth device remains unaware of the hardware change and continues communicating as if the connection had remained unchanged. Once the reassignment is complete, data is transmitted between the external Bluetooth device and the new display device via the second Bluetooth control unit, completing the transition transparently from the user's perspective.

In some examples, the method 100 may further comprise detecting a change in the seating position of the user in the vehicle. The initial seating position may be assigned to the first display device. The method 100 may further comprise determining a second display device assigned to the new seating position of the user. For example, a change in the seating position of the user in the vehicle may be detected by a variety of sensor-based or software-based systems integrated into the vehicle. In some examples, seat occupancy sensors may be used in combination with user identification mechanisms, such as weight sensing, pressure distribution, or camera-based recognition. Alternatively, the vehicle may use input from personal devices (e.g., smartphone location via Bluetooth signal strength), seatbelt usage, or user authentication at specific displays to infer a change in position. For instance, if a user's smartphone was previously associated with the rear left seat and is later detected near the front passenger seat, the system may interpret this as a seat change and trigger reassignment logic accordingly.

The initial seating position of the user may be associated with a specific display device based on predefined system configuration or contextual behavior. Each seat in the vehicle may have a dedicated or proximate display device, such as a rear-seat entertainment screen, a front passenger touchscreen, or the central infotainment display, assigned to it. When a Bluetooth connection is first established, the user's position may be registered and automatically link the external Bluetooth device to the corresponding display device. This enables personalized content delivery, localized control, and streamlined interaction between the user and the vehicle system.

When a new seating position is detected, the system may determine which display device is now associated with that position. This determination may be based on the physical layout of the vehicle, internal seat-display mapping tables, or spatial proximity rules defined within the software. For example, if the system detects that the user has moved from the rear-right seat (with an assigned RSE display) to the front-left seat (associated with the head unit), the system may map the new seating position to the front display. This reassignment allows the system to continue routing relevant data and user interface elements to the display nearest to the user, enhancing continuity and convenience in interaction.

After determining the new display device, the system may adapt the routing of Bluetooth data accordingly. The method 100 may further comprise transmitting data between the second display device and the external Bluetooth device via the connected Bluetooth control unit. That is in some examples, only the display device may change while the existing Bluetooth control unit remains active. In that case, the system may update its internal routing tables to transmit data from the external Bluetooth device to the second display device, without affecting the underlying Bluetooth connection. In other examples, if the new display is associated with a different Bluetooth control unit, the system may also initiate a Bluetooth control unit handover as described previously. The Bluetooth session may then be switched from the first to the second Bluetooth control unit, leveraging the unified Bluetooth address to preserve a seamless experience. In both cases, the user continues interacting with the system without any interruption, regardless of whether the switch involves only the user interface layer or also the hardware controller layer.

For example, in the systems comprising a plurality of control units, each with its own one or more Bluetooth control units (for example system 300, Fig. 3), the control information may be exchanged via a communication network within the vehicle. For example, the control information may be exchanged among the plurality of Bluetooth control units via a TCP/IP-based communication network within the vehicle. Each control unit may maintain a local copy of the connection-related data and synchronize updates through periodic broadcasts or event-triggered messages. Coordination among the Bluetooth control units in this case may involve negotiating which control unit enters advertising mode, transferring session data during a Bluetooth control unit switch, or updating profile assignments and device states to maintain coherent system behavior. This coordination may ensure that despite the distributed architecture, the Bluetooth system functions as a unified and responsive interface for external Bluetooth devices.

In some examples, the method 100 may further comprise storing connection information of the external Bluetooth device in a data structure. The data structure may be updated when the connection status of the external Bluetooth device changes. The connection information stored in the data structure may be provided for managing the Bluetooth connection within the vehicle system. In some examples, connection information of the external Bluetooth device may refer to the set of data elements that describe the current state, history, and/or communication context of the Bluetooth connection between the vehicle and a specific external Bluetooth device. The connection information may include identifiers and technical parameters that enable the system to track, resume, or modify an active or previously established connection. The connection information may persist beyond the duration of a single session and may support seamless re-connection, continuity across display devices, and session handovers without requiring a complete reinitialization of the Bluetooth pairing. The connection information may be stored in a data structure that allows efficient retrieval, updating, and management of per-device records. The data structure may be implemented as a lookup table, a key-value mapping, a database-like object in memory, or another form of indexed storage mechanism. Each entry in the data structure may correspond to one external Bluetooth device, identified by its Bluetooth address (BD_ADDR), and may contain associated metadata such as profile activation states, authentication keys, assigned display device, or internal session IDs. The data structure may reside in memory accessible by the processor circuit and may be shared among multiple Bluetooth control units to ensure consistency across the system.

The data structure may be updated when the connection status of the external Bluetooth device changes. For example, when a device connects, disconnects, switches between Bluetooth control units, or changes the assigned display device, the corresponding entry in the data structure may be modified to reflect the new state. The connection status may include states such as "connected", "disconnected", "in handover", or "awaiting reconnection", and may also include profile-specific states, such as whether audio streaming or hands-free calling is currently active. Events from the Bluetooth protocol stack may be monitored and write updated values into the data structure in real time or at defined synchronization intervals.

The connection information stored in the data structure may be used for managing the Bluetooth connection within the vehicle system. Managing the Bluetooth connection may comprise selecting an appropriate Bluetooth control unit to handle an incoming or ongoing connection, reassigning the connection to a different display device based on user interaction, or restoring a previous session after the vehicle restarts or the user changes seat position. It may further comprise maintaining profile continuity, authenticating reconnections using stored link keys, handling data routing between the external Bluetooth device and the correct display interface, and enabling seamless transitions during load balancing or hardware failover. By centralizing this information, the vehicle system can ensure a consistent and uninterrupted user experience, regardless of underlying hardware changes or user behavior.

In some examples, the connection information may comprise at least one of the following: a unique device address, a link key for authentication of the connection, an index for internal assignment of the external Bluetooth device, a device name for identifying the external Bluetooth device, the activated Bluetooth profiles of the external Bluetooth device, the currently assigned display device of the external Bluetooth device, or the current connection status of the external Bluetooth device. The unique device address may refer to the Bluetooth Device Address (also referred to "BD_ADDR") of the external Bluetooth device, which mya be a 48-bit globally unique identifier used to distinguish the device from others in the wireless environment. This address allows the vehicle system to consistently recognize and associate a specific external Bluetooth device with its stored connection data. The link key for authentication of the connection may be a 128-bit cryptographic value generated during the Bluetooth pairing process and is used to authenticate and encrypt communication with the external Bluetooth device. Storing the link key allows the system to perform secure reconnection without requiring a new pairing process.

The index for internal assignment of the external Bluetooth device may serve as a system-internal reference number or handle used to organize, retrieve, and manage multiple device entries within a data structure, such as a lookup table. The device name for identifying the external Bluetooth device may be a user-readable label transmitted by the external Bluetooth device during service discovery, such as "Michael's iPhone" or "Sony Controller", and may be displayed in the vehicle interface for easier device selection or management.

The activated Bluetooth profiles of the external Bluetooth device may indicate which Bluetooth services are currently supported or in use during the session. Examples of such profiles may include Advanced Audio Distribution Profile (A2DP) for media streaming, Hands-Free Profile (HFP) for hands-free telephony, or Human Interface Device Profile (HID) for Bluetooth input devices. Storing this information enables proper service routing and profile-specific connection management. The currently assigned display device of the external Bluetooth device, specifying which in-vehicle display unit (such as a head unit or rear seat display) is logically associated with the ongoing Bluetooth session. This mapping allows the system to route user interface interactions and media output correctly. The current connection status of the external Bluetooth device may describe whether the device is connected, disconnected, in pairing mode, parked, or undergoing a handover between Bluetooth control units. Maintaining this status in real-time allows the system to manage reconnection procedures, resource allocation, and user interaction flows in a seamless and coordinated manner.

### Load balancing

In some examples, the method 100 may further comprise selecting a Bluetooth control unit from the plurality of Bluetooth control units for establishing a connection with the external Bluetooth device based on operating parameters of the plurality of Bluetooth control units. During establishing the Bluetooth connection, as described above, the system may receive a connection request via the Bluetooth control unit currently in advertising mode. Upon receiving the request, it may be determined which of the plurality of Bluetooth control units should handle the connection. This determination may be made dynamically, rather than relying on a fixed assignment. The current system may be analyzed and the connection to the Bluetooth control unit that is best suited to manage the new session may be assigned based using the unified Bluetooth address to maintain a consistent external identity. The selection of the best suited Bluetooth control unit may be based on one or more operating parameters. The one or more operating parameters may reflect the real-time status and/or capability of each Bluetooth control unit. The operating parameters may comprise, for example, resource usage metrics, performance indicators, or contextual conditions related to user interaction or hardware proximity. By evaluating these parameters, it may be avoided assigning new connections to overloaded or distant Bluetooth control units, and instead balance the system load for improved efficiency and stability. This mechanism enables intelligent distribution of connection responsibilities and supports seamless user experience even in complex vehicle architectures with multiple display devices and Bluetooth control units. In some examples, a dedicated Bluetooth control unit of the plurality of Bluetooth control units, such as the head unit, may always be used to establish a first connection with the external Bluetooth device.

In some examples, the selection of the Bluetooth control unit may be based on at least one of the following operating parameters: selecting the Bluetooth control unit with the lowest number of connected external Bluetooth devices, selecting the Bluetooth control unit with the lowest current data transmission rate, selecting the Bluetooth control unit with the lowest processor load, or selecting a Bluetooth control unit located in physical proximity to the display device being used. The number of external Bluetooth devices currently connected to each Bluetooth control unit may be used as a parameter to determine which Bluetooth control unit is best suited to handle a new connection. It may be evaluated how many active device connections are already maintained by each Bluetooth control unit and select the one with the lowest count. This allows for an even distribution of connection responsibilities across the available Bluetooth control units, avoiding congestion and improving the stability and performance of each connection. It also helps maintain service quality when multiple devices are interacting with the system simultaneously.

The application-layer knowledge of active Bluetooth profiles, such as ongoing audio streams, may serve as an effective parameter for load balancing. For instance, if a Bluetooth control unit is currently handling an active audio stream for another external Bluetooth device, the system may assign a new incoming connection to a different Bluetooth control unit to avoid congestion. The system may base the selection on whether high-bandwidth profiles are presently active on a given controller. This approach enables efficient pairing decisions while preserving the performance of ongoing sessions.

The processor load of each Bluetooth control unit may be another relevant parameter. This load may represent the current utilization of a processor circuitry responsible for handling protocol-level and application-level Bluetooth functions. Selecting the Bluetooth control unit with the lowest processor load ensures that computational resources are available to manage the new session efficiently. This may reduce latency, improve reliability, and ensure that security and protocol tasks (such as authentication and encryption) are executed without delays.

The physical proximity of a Bluetooth control unit to the display device being used may also be taken into account. Proximity may refer to the physical or logical association between a specific Bluetooth control unit and a display device within the vehicle, such as a head unit or rear seat display. Selecting the Bluetooth control unit that is closest to the relevant display device can minimize internal data transfer paths and improve the responsiveness of the system, for example when routing audio or user interface interactions. This may lead to a more seamless user experience and more efficient internal communication.

In some examples, the method 100 may further comprise monitoring operating parameters of the plurality of Bluetooth control units. The method 100 may further comprise switching an external Bluetooth device from a first Bluetooth control unit to a second Bluetooth control unit based on the operating parameters of the plurality of Bluetooth control units. For example, monitoring the operating parameters of the plurality of Bluetooth control units may refer to continuously or periodically collecting runtime data that reflects the current load, performance, and/or operational status of each Bluetooth control unit in the vehicle. This monitoring may be performed by a centralized processor circuit, such as one integrated in a head unit, or in a distributed manner by a plurality of Bluetooth control units sharing status information via an internal communication network. The monitored operating parameters may comprise one or more of the following: the number of currently connected devices, active data transmission rates, processor utilization, or proximity to the user's active display device. Based on the monitoring informed decisions about whether a connection should remain assigned to its current Bluetooth control unit or be reassigned to another may be made to perform load balancing and maintain performance and reliability.

In some examples, switching the external Bluetooth device from the first Bluetooth control unit to the second Bluetooth control unit may comprise the transfer of the active Bluetooth session within the vehicle system while maintaining a consistent interface toward the external device. This may be based on the unified Bluetooth address, which is shared across all Bluetooth control units in the vehicle. The unified Bluetooth address ensures that the external Bluetooth device perceives the vehicle as a single logical Bluetooth device, regardless of which internal Bluetooth control unit is actively managing the communication. As a result, a handover between Bluetooth control units may be performed transparently without requiring the external device to reinitiate discovery, authentication, or service negotiation. The handover process may include transferring connection state information such as link keys, session identifiers, and active profile contexts (e.g., audio or telephony streams) from the first Bluetooth control unit to the second. In systems with a centralized architecture (for example system 200, see Fig. 2), such as a head unit with multiple integrated Bluetooth control units, the processor circuit may manage this transfer via shared memory or internal signaling mechanisms. In distributed systems with multiple vehicle control units (such as system 300, see Fig. 3), synchronization of state information may occur via an internal network, such as a TCP/IP-based communication interface. In either case, the transition may be executed without closing the Bluetooth link from the perspective of the external device, because the link remains associated with the unified Bluetooth address, not with a specific hardware controller.

This allows the vehicle to dynamically optimize connection handling and load balancing based on real-time system conditions, such as load distribution, signal quality, or user interaction context. Since the external device remains unaware of which physical Bluetooth control unit is currently active, the system may make intelligent decisions about switching Bluetooth control units without user involvement. The use of a unified Bluetooth address effectively decouples the Bluetooth session from the underlying hardware, enabling seamless handovers, improved fault tolerance, and efficient resource utilization across the vehicle's internal Bluetooth infrastructure

In some examples, the external Bluetooth device may be switched from the first Bluetooth control unit to the second Bluetooth control unit if at least one of the following operating parameters is met: the number of external devices connected to the first Bluetooth control unit exceeds a predefined threshold, the current data transmission rate of the first Bluetooth control unit reaches a defined maximum capacity, the processor load of the first Bluetooth control unit exceeds a predefined limit, or the second Bluetooth control unit has a lower load than the first Bluetooth control unit. The number of external devices connected to the first Bluetooth control unit may be used as a threshold-based trigger for switching. If this number exceeds a predefined limit, configured based on hardware capabilities or system policy, it may be determined that the Bluetooth control unit is becoming overloaded. To avoid performance degradation, such as reduced bandwidth per device or delayed response times, the system may initiate a handover of one or more active connections to a second Bluetooth control unit with more available capacity. For example, if the first Bluetooth control unit is currently handling four active devices, such as a driver's smartphone, a smartwatch, a media tablet, and wireless headphones, and a fifth device attempts to connect, the system may transfer the smartwatch connection to the second Bluetooth control unit to restore balance and prevent congestion.

The current data transmission rate of the first Bluetooth control unit may also serve as a switching criterion. If the amount of data being sent or received by the Bluetooth control unit approaches or reaches a defined maximum capacity, for example, due to multiple concurrent media streams or file transfers, it may be concluded that additional connections would exceed the bandwidth limits of the Bluetooth control unit. To maintain data throughput and quality of service, the system may switch an active connection to a second Bluetooth control unit that is currently handling less traffic. For instance, if the first Bluetooth control unit is already streaming music to two headsets and simultaneously processing navigation prompts via Bluetooth audio, and the user initiates a large file sync via Bluetooth from their phone, the system may offload one of the headsets to the second Bluetooth control unit to maintain uninterrupted streaming.

The processor load of the first Bluetooth control unit may be monitored to detect whether its computational capacity is being exceeded. If the Bluetooth control unit is responsible not only for Bluetooth protocol handling but also for encryption, audio encoding, or data routing, the total processor usage may rise significantly. If the processor load crosses a predefined threshold, the system may interpret this as a risk to real-time performance and initiate the transfer of one or more connections to a second Bluetooth control unit with lower processor utilization. For example, if the first Bluetooth control unit is managing two encrypted connections with ongoing audio streaming and phone call processing, causing its CPU load to reach 90%, one of the connections may be reassigned, such as a rear-seat entertainment headset, to a second Bluetooth control unit operating at only 40% load to ensure continued low-latency operation.

The second Bluetooth control unit having a lower load than the first Bluetooth control unit may itself be a sufficient condition to initiate a switch, even if no specific threshold has been breached. It may be compared to the relative load between the Bluetooth control units and proactively migrate connections to optimize distribution of active sessions. For example, if the first Bluetooth control unit is managing three active devices with moderate traffic and the second unit is idle or managing only one low-bandwidth device, the system may shift one of the first controller's active media connections to the second unit. This allows better scalability and prepares the system to accommodate further incoming connections without delay.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 13).

**Fig. 2** schematically illustrates a system 200 for managing Bluetooth connections in a vehicle comprising a plurality of Bluetooth control units. The system 200 comprises a plurality of Bluetooth control units 220 and 230. In some examples, the system 200 may comprise more than two Bluetooth control units. The system 200 further comprises a vehicle control unit210, which may be part of an ECU. The vehicle control unit210 is configured to provide a unified Bluetooth address for the plurality of Bluetooth control units 210, 220 in the vehicle. Each of the plurality of Bluetooth control units 210, 220 in the vehicle is assigned to a display device in the vehicle. The vehicle control unit210 is further configured to receive a connection request from an external Bluetooth device for establishing a connection with a first display device in the vehicle by a user. The vehicle control unit210 is further configured to establish a Bluetooth connection between the external Bluetooth device and one of the plurality of Bluetooth control units 210, 220 using the unified Bluetooth address. The vehicle control unit210 is further configured to transmit data between the first display device and the external Bluetooth device via the connected Bluetooth control unit 210.

For example, the vehicle control unit 210 may comprise processor circuit which may be or comprise a single dedicated processor, a single shared processor, or a plurality of individual processors, some or all of which may be shared, a microcontroller, an application-specific integrated circuit (ASIC), an integrated circuit (IC), a system on a chip (SoC), a programmable logic element, or a field-programmable gate array (FPGA) with a microprocessor, on which software for screen control according to the principles described herein is executed. The processor circuit may be, for example, a central processing unit (CPU), a graphics processing unit (GPU), a neuromorphic processor, and/or a tensor processing unit. The processor circuit 210 may further be connected to a memory, such as a read-only memory (ROM) for storing software, a random-access memory (RAM), and/or a non-volatile memory. The system vehicle control unit 210 may, for example, comprise or be coupled to a memory configured to store instructions which, when executed by the processor circuit, cause the processor circuit to perform the steps and methods described herein.

The plurality of Bluetooth control units 220, 230 in the system 200 may be implemented as individual hardware modules capable of handling Bluetooth protocol operations according to the Bluetooth Core Specification. In some examples, each Bluetooth control unit may comprise a dedicated Bluetooth chipset or integrated Bluetooth transceiver that supports BR/EDR and/or BLE communication. These hardware modules may be implemented as standalone chips or embedded components within larger electronic systems. The Bluetooth control units may further include low-level firmware, including Host Controller Interface (HCI) logic, enabling them to handle device discovery, pairing, connection management, and profile-specific operations such as A2DP, HFP, or HID. Each Bluetooth control unit may be physically connected to the vehicle's internal data bus and may expose its HCI interface to the processor circuit 210 for centralized control. For example, the plurality of Bluetooth control units 220, 230 and the processor circuit may be part of an ECU of the vehicle.

This architecture of system 200 corresponds to a centralized configuration, in which a single vehicle control unit, such as an ECU, comprises both the processor circuit and the plurality of Bluetooth control units 220, 230. The processor circuit may centrally coordinate all Bluetooth-related functions, including the assignment of the unified Bluetooth address shared among all Bluetooth control units. This allows the vehicle to present itself as a single Bluetooth device to external devices, regardless of which Bluetooth control unit handles the actual connection. When a connection request is received, for example, initiated by a user through a display device, the processor circuit evaluates which Bluetooth control unit should establish the connection, possibly based on display association, load balancing criteria, or physical proximity. Once the Bluetooth connection is established using the unified address, the processor circuit ensures that data such as audio, input commands, or metadata is routed to and from the appropriate display device via the active Bluetooth control unit.

In this centralized setup, the vehicle control unit 210 also manages the internal mapping between Bluetooth sessions and display devices. Even though each Bluetooth control unit is associated with a specific display, the routing of data is flexible. The processor circuit may redirect the data stream dynamically, allowing the user to switch from one display device to another without disrupting the Bluetooth session. If the system determines that a different Bluetooth control unit should take over the connection, for example due to load conditions or a user interaction, it may seamlessly transfer the Bluetooth context to another Bluetooth control unit, while still exposing the same unified Bluetooth address. System 200 enables both robust session continuity and intelligent controller coordination, all managed centrally within a single vehicle control unit.

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 3 - 13).

**Fig. 3** schematically illustrates a system 300 for managing Bluetooth connections in a vehicle comprising a plurality of Bluetooth control units. The system 300 comprises a plurality of Bluetooth control units 330 and 340. In some examples, the system 300 may comprise more than two Bluetooth control units. The system 300 further comprises a first vehicle control unit 310 and a second vehicle control unit 320. In some examples, the system 300 may comprise more than two processor circuits 310, 320. The first vehicle control unit310 is configured to provide a unified Bluetooth address for the plurality of Bluetooth control units 330, 340 in the vehicle. Each of the plurality of Bluetooth control units 330, 340 in the vehicle is assigned to a display device in the vehicle. The second vehicle control unit 320 is configured to receive a connection request from an external Bluetooth device for establishing a connection with a second display device in the vehicle by a user. The second vehicle control unit 320 is configured to establish a Bluetooth connection between the external Bluetooth device and a second Bluetooth control unit using the unified Bluetooth address. The second vehicle control unit 320 is also configured to transmit data between the second display device and the external Bluetooth device via the connected second Bluetooth control unit. For example, each of the plurality of Bluetooth control units 220, 230 and a corresponding vehicle control unit may be part of a separate ECU of the vehicle.

For example, each of the vehicle control units 310, 320 may comprise a processor circuit which may be or comprise a single dedicated processor, or a plurality of individual processors, some or all of which may be shared, a microcontroller, an application-specific integrated circuit (ASIC), an integrated circuit (IC), a system on a chip (SoC), a programmable logic element, or a field-programmable gate array (FPGA) with a microprocessor, on which software for screen control according to the principles described herein is executed. The processor circuit may be, for example, a central processing unit (CPU), a graphics processing unit (GPU), a neuromorphic processor, and/or a tensor processing unit. The processor circuits of each vehicle control unit may further be connected to a memory, such as a read-only memory (ROM) for storing software, a random-access memory (RAM), and/or a non-volatile memory. Each of the vehicle control units may, for example, comprise or be coupled to a respective memory configured to store instructions which, when executed by the respective processor circuits, cause the processor circuits to perform the steps and methods described herein.

The system 300 shown in Fig. 3 represents a distributed architecture for managing Bluetooth connections in a vehicle, wherein each Bluetooth control unit 330, 340 may be hosted by a separate vehicle control unit 310 and 320, such as electronic control ECUs. In this setup, each vehicle control unit may include its own processor circuit and be responsible for managing one or more Bluetooth control units locally. For example, vehicle control unit 310 may include Bluetooth control unit 330, and vehicle control unit 320 may include Bluetooth control unit 340. The control units may be connected to display devices located throughout the vehicle, such as the central infotainment display, passenger touchscreen, or rear-seat entertainment (RSE) screens. Each vehicle control unit may communicate with each of the Bluetooth control units. Communication and coordination between the vehicle control units 310 and 320 may occur via an internal vehicle communication network such as a TCP/IP-based bus or automotive Ethernet.

The first vehicle control unit 310 may be designated to generate and maintain the unified Bluetooth address used across all Bluetooth control units in the vehicle (for example the head unit). This shared address allows the external Bluetooth device to perceive the vehicle as a single logical Bluetooth endpoint, even though multiple physical Bluetooth control units are involved. When a user initiates a connection from an external Bluetooth device, e.g., by interacting with a display device associated with ECU 320, the second vehicle control unit 320 may receive the connection request, evaluate its own associated Bluetooth control unit 340, and establish the connection using the unified Bluetooth address. From the external device's perspective, the vehicle exposes a single Bluetooth identity, while internally, the ECUs determine which Bluetooth control unit handles the connection.

Once the Bluetooth connection is established via the selected Bluetooth control unit, the second vehicle control unit 320 may also handle the transmission of data between the external Bluetooth device and the associated display device. The distributed system architecture enables localized decision-making and decentralized management of Bluetooth sessions, while still maintaining global consistency through shared session information and unified addressing. Coordination between vehicle control units ensures that handovers, user display switches, or load balancing operations can be executed seamlessly across the system. This architecture supports flexible scalability and modularization of the Bluetooth infrastructure while still delivering a coherent and uninterrupted user experience.

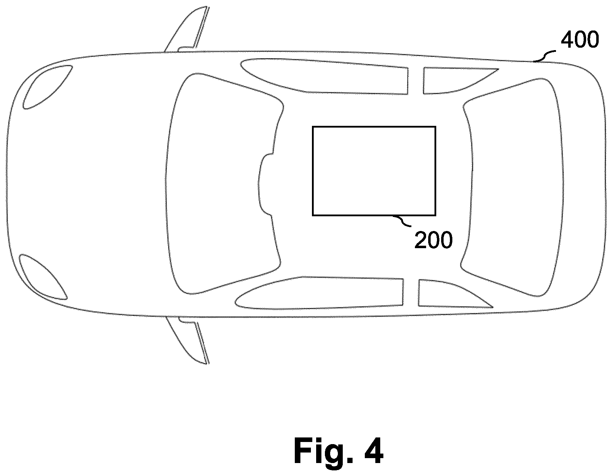

Further details and aspects are mentioned in connection with the examples described above or below. The example shown in Fig. 3 may include one or more optional additional features corresponding to one or more aspects mentioned in connection with the proposed concept or one or more examples described above (e.g., Figs. 1 - 2) or below (e.g., Figs. 4 - 13).

**Fig. 4** illustrates schematically a vehicle 400 comprising system 200 for managing Bluetooth connections in a vehicle comprising a plurality of Bluetooth control units. The system 200 may be part of an ECU of the vehicle as described above with regards to Fig. 2.

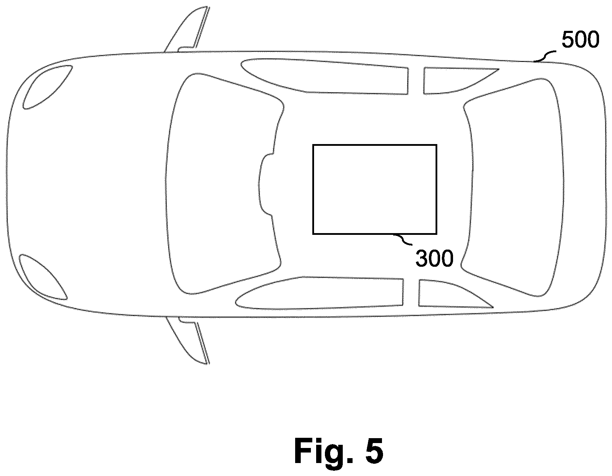

**Fig. 5** illustrates schematically a vehicle 500 comprising system 300 for managing Bluetooth connections in a vehicle comprising a plurality of Bluetooth control units. The system 300 may comprise or be part of a plurality of ECUs of the vehicle as described above with regards to Fig. 3.

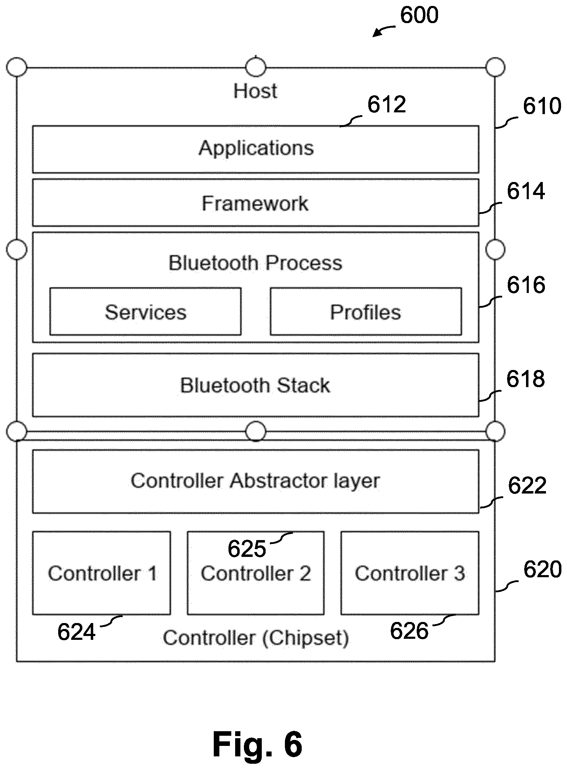

Further details and aspects are mentioned in connection with the examples described above or below. The example shown in Figs. 4, 5 may include one or more optional additional features corresponding to one or more aspects mentioned in connection with the proposed concept or one or more examples described above (e.g., Figs. 1 - 3) or below (e.g., Figs. 6 - 13).

### Further examples

**Fig. 6** illustrates a system architecture 600 for managing Bluetooth connections in a vehicle, comprising a host system 610 and a controller chipset 620. The host system 610 may be implemented as a software Bluetooth stack executed by a central control unit of the vehicle, such as a head unit or an infotainment ECU. The host 612 is structured in a layered manner, each layer representing a different abstraction level in the Bluetooth software architecture. At the top of the host system 610 is the application layer 612, which includes the user-facing applications that utilize

Bluetooth functionality, such as media streaming, phone connectivity, or device settings. Below that lies the framework layer 614, which provides the middleware and interface logic to coordinate between applications and lower Bluetooth stack components. The Bluetooth process layer 616 comprises components for handling Bluetooth profiles and services, for example A2DP for media streaming or HFP for hands-free calling. This layer implements Bluetooth-specific protocols and manages profile sessions. Below the Bluetooth process is the Bluetooth stack 618, which may implement the core Bluetooth protocol stack, including the Logical Link Control and Adaptation Protocol (L2CAP), RFCOMM, and Baseband layers. This stack handles low-level data formatting, channel management, and other protocol-specific tasks.

The controller abstractor layer 622 is located beneath the Bluetooth stack. This layer provides a standardized software interface to access the underlying Bluetooth control units. It abstracts the hardware implementation of each Bluetooth control unit and ensures compatibility across different chipsets or architectures. This abstraction allows upper layers of the host stack to interact with multiple Bluetooth control unit s as if they were a unified entity.

The controller chipset 620 includes multiple physical Bluetooth control units, illustrated as controller 1 (624), controller 2 (625), and controller 3 (626). These Bluetooth control unit s are responsible for executing the actual wireless communication with external Bluetooth devices, including signal modulation, baseband processing, and radio transmission/reception.

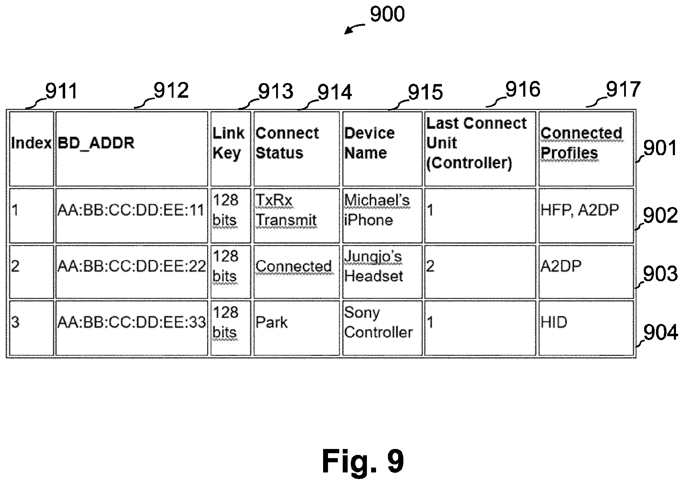

The system architecture is designed to present a unified Bluetooth address to external devices, regardless of which Bluetooth control unit is active. This is made possible by maintaining a lookup table within the host 612 (see Fig. 9), which stores metadata about Bluetooth connections. The host 610 may synchronize this information with the Bluetooth control unit side using Host Controller Interface (HCI) vendor-specific commands that support push/pull or read/write operations. In configurations where multiple ECUs are used, this synchronization may be performed over TCP/IP sockets, following a client-server model.

The architecture supports load balancing by distributing Bluetooth connections across the available Bluetooth control unit s. The host software may evaluate Bluetooth control unit utilization, such as the number of active connections or data throughput, and dynamically assign new connections to the least congested Bluetooth control unit. Additionally, the interface may allow for user-layer involvement, where upper layers can specify Bluetooth control unit assignment preferences or reassignments.

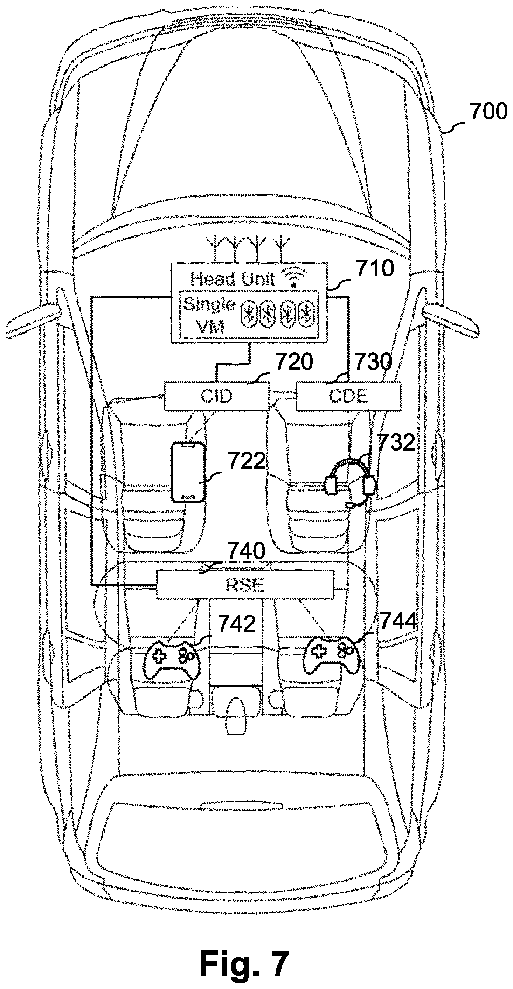

Further details and aspects are mentioned in connection with the examples described above or below. The example shown in Fig. 6 may include one or more optional additional features corresponding to one or more aspects mentioned in connection with the proposed concept or one or more examples described above (e.g., Fig. 5) or below (e.g., Figs. 7-13).

**Fig. 7** illustrates a vehicle 700 managing Bluetooth connections using a single vehicle control unit. The vehicle 700 comprises a head unit 710, which hosts a single virtual machine (VM) managing a plurality of Bluetooth control units, each responsible for handling wireless communication with different external Bluetooth devices. The head unit 710 includes the software stack and Bluetooth stack necessary for processing and routing Bluetooth data, and may implement the lookup table and synchronization logic for the unified Bluetooth address architecture described above.

The head unit 710 includes a plurality of Bluetooth control units, each of which may be logically or physically assigned to different display devices in the vehicle. For example, Central Information Display (CID) 720 may be a front-seat central infotainment display, Co-Driver Entertainment (CDE) 730 may be a co-driver entertainment screen, and Rear Seat Entertainment (RSE) 740 may be a rear-seat entertainment system. Each display device may be associated with its own Bluetooth control unit that communicates with an external Bluetooth device, such as a smartphone 722, a wireless headset 732, or Bluetooth-enabled game controllers 742, 744. The controllers and displays may be connected via wired interfaces as indicated in the figure. In this configuration of Fig. 7, all Bluetooth control units are managed centrally by the single head unit 710. The head unit 710 may act as a clock master to synchronize timing across all Bluetooth control units, ensuring that pairing and data transmission occur in a coordinated and reliable manner. The host also manages a unified lookup table, which stores metadata including Bluetooth device addresses, link keys, connection states, assigned display devices, and active profiles. This enables flexible routing of Bluetooth traffic to any associated display device, regardless of which controller maintains the physical connection.

This architecture allows seamless switching and load balancing between Bluetooth control unit s, while exposing a unified Bluetooth address to the external devices. The system behaves as a single logical Bluetooth entity, even though multiple hardware Bluetooth control unit s are involved behind the scenes. This allows user interactions, such as media streaming or headset control, to be flexibly routed to the appropriate display without requiring re-pairing or visible disruption to the user.

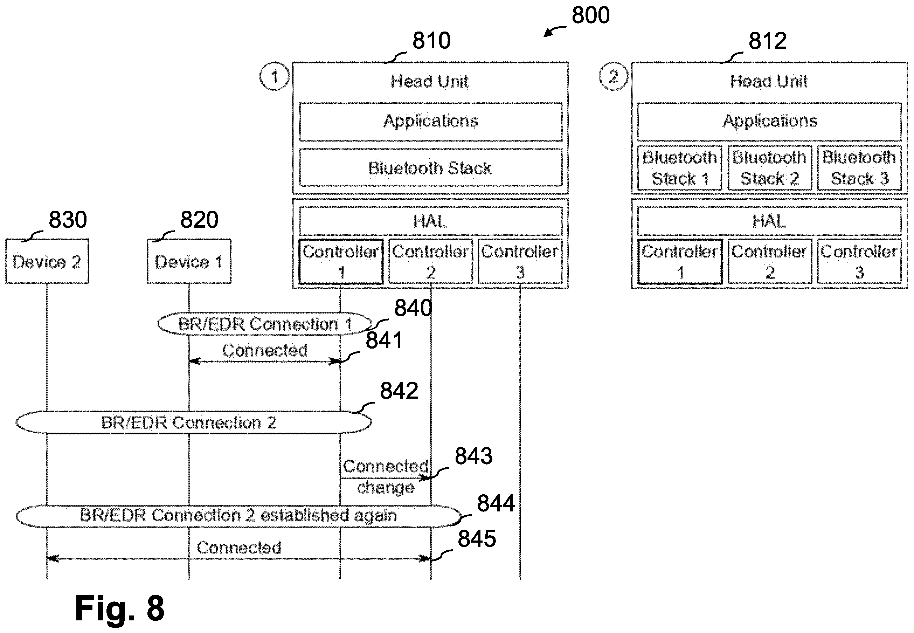

Further details and aspects are mentioned in connection with the examples described above or below. The example shown in Fig. 7 may include one or more optional additional features corresponding to one or more aspects mentioned in connection with the proposed concept or one or more examples described above (e.g., Figs. 1-6) or below (e.g., Figs. 8-13).

**Fig. 8** illustrates a flow diagram 800 for managing Bluetooth connections using a single vehicle control unit or multiple vehicle control units. In the case of managing Bluetooth connections using a single vehicle control unit, flow diagram 800 may correspond to the architecture of the vehicle of Fig. 7. Fig. 8 illustrates two architectural alternatives of the head unit 810, 812 as described in connection with Fig. 6. Head unit 810 implements the Bluetooth stack as a single unified Bluetooth stack that handles all Bluetooth communication for multiple Bluetooth control unit s. This setup centralizes the Bluetooth logic and simplifies coordination across Bluetooth control unit s through a single software instance. Head unit 812 implements the Bluetooth stack as multiple independent Bluetooth stack instances (e.g., Bluetooth Stack 1, 2, 3), each managing a separate Bluetooth control unit. This allows for modular or parallel operation but requires more complex coordination between stack instances.

In step 840 a first external Bluetooth device 820 (device 1) initiates a Bluetooth communication with the head unit 810/812. When the first external Bluetooth device 820 attempts to connect, a BR/EDR (Basic Rate/Enhanced Data Rate) connection is established with controller 1 of the head unit 810/812. In step 841, the connection state is considered active, and data transmission may begin over the established BR/EDR link between controller 1 and the first external Bluetooth device 820. In step 842, a second external Bluetooth device 830 (Device 2) initiates a connection request. A new BR/EDR connection 2 is established with the system. As a result of internal load balancing, profile reallocation, or bandwidth optimization, a connection change is triggered in step 843, and the second connection is reassigned to controller 3. In step 844, the BR/EDR connection 2 is re-established with controller 3, ensuring uninterrupted Bluetooth communication from the perspective of the second external Bluetooth device 830. In step 845, the connection between controller 3 and the second external Bluetooth device is active, and data exchange continues seamlessly without requiring user interaction or re-pairing.

This example applies to both implementations of the head unit: 810, where a unified Bluetooth stack handles all Bluetooth control unit s, and 812, where multiple Bluetooth stack instances (Stack 1, Stack 2, Stack 3) are used. The abstraction via Hardware Abstraction Layer (HAL) and the internal lookup logic allow the seamless migration of connections between Bluetooth control unit s, enabled by the unified Bluetooth address architecture.

Further details and aspects are mentioned in connection with the examples described above or below. The example shown in Fig. 8 may include one or more optional additional features corresponding to one or more aspects mentioned in connection with the proposed concept or one or more examples described above (e.g., Fig. 7) or below (e.g., Figs. 9-13).

Fig. 9 illustrates a lookup table 900 for managing Bluetooth connection information within a vehicle system. The lookup table 900 may be maintained in memory on the host side, for example in non-volatile RAM (NVRAM), and may be accessed by the processor circuit to manage Bluetooth connections across multiple Bluetooth control units. The lookup table 900 allows the system to centrally store and retrieve metadata associated with external Bluetooth devices, thereby enabling seamless handovers, dynamic routing, and consistent connection behavior under the unified Bluetooth address architecture.

The lookup table 900 comprises three rows, 901, 902, 903, each representing a distinct external Bluetooth device connected to the vehicle system. These entries store individualized connection metadata for managing Bluetooth interactions under the unified Bluetooth address scheme. The lookup table 900 shows in a first column 911 an index value assigned to each external Bluetooth device entry. The index may be used for internal referencing and fast lookup operations. In the example shown, three devices are listed with index values 1, 2, and 3. The second column 912 shows the Bluetooth Device Address (BD_ADDR) of each external Bluetooth device. The BD_ADDR is a globally unique identifier that allows the vehicle system to distinguish between multiple Bluetooth devices. Each BD_ADDR entry may be used to correlate ongoing connections or re-establish links with previously paired devices. The third column 913 indicates the link key associated with the connection. The link key is a cryptographic key exchanged during the pairing process and may be used for authentication and encryption of subsequent communication sessions. In this example, each device stores a 128-bit link key. The fourth column 914 provides the current connection status of the external Bluetooth device. Possible values include "TxRx Transmit", "Connected", or "Park", indicating whether the device is actively transmitting/receiving, currently connected, or in a low-power state respectively. The fifth column 915 lists the device name for user-friendly identification, such as "Michael's iPhone", "Jungjo's Headset", or "Sony Controller". This information may be displayed in the user interface and assists in associating connections with users or roles within the vehicle. The sixth column 916 denotes the last connected Bluetooth control unit that handled the communication with the external Bluetooth device. This may refer to the Bluetooth control unit index or identifier within the vehicle system and is useful for maintaining connection continuity, supporting load balancing, or optimizing reconnection behavior. The seventh column 917 indicates the set of connected Bluetooth profiles associated with each external Bluetooth device. These may include profiles such as A2DP (Advanced Audio Distribution Profile) for media streaming, HFP (Hands-Free Profile) for telephony, or HID (Human Interface Device Profile) for controllers or keyboards. The stored profile data allows the system to correctly route services and ensure compatibility during handover scenarios or switching of display devices.

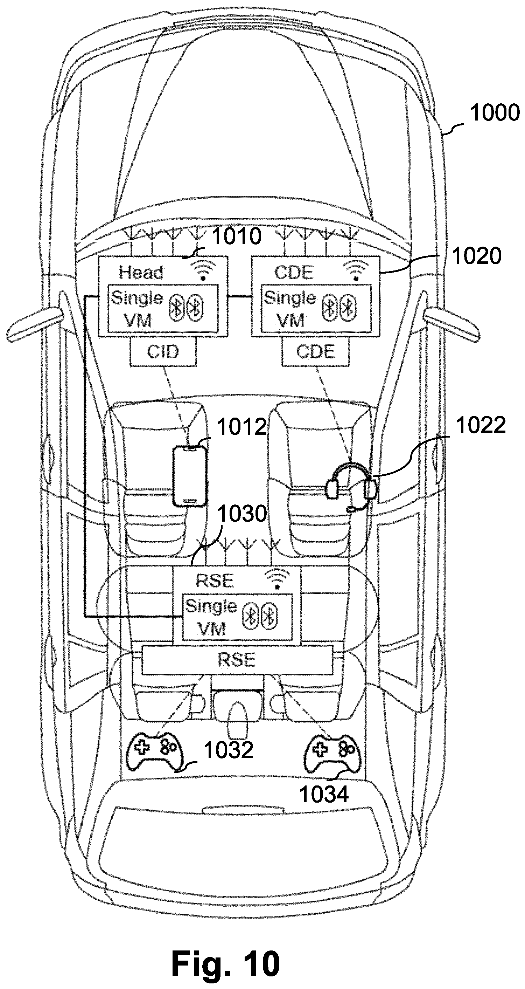

Further details and aspects are mentioned in connection with the examples described above or below. The example shown in Fig. 9 may include one or more optional additional features corresponding to one or more aspects mentioned in connection with the proposed concept or one or more examples described above (e.g., Figs. 7-8) or below (e.g., Figs. 10-13).

**Fig. 10** illustrates a vehicle system 1000 comprising a plurality of distributed vehicle control units, each including a Bluetooth control unit and corresponding processing stack for managing Bluetooth connections. The vehicle system 1000 comprises a head unit 1010, a co-driver entertainment unit (CDE) 1020, and a rear-seat entertainment unit (RSE) 1030. Each of these vehicle control units includes a software stack executed in a virtual machine (VM) and a dedicated Bluetooth control unit configured to establish and maintain wireless connections with external Bluetooth devices. The virtual machines are configured to expose a unified Bluetooth address to external devices, such that the vehicle system appears as a single logical Bluetooth entity regardless of internal distribution.

The central information display (CID) in the head unit 1010 is associated with an external Bluetooth device 1012, such as a smartphone. The co-driver display device CDE 1020 is paired with a Bluetooth headset 1022. The rear-seat entertainment system RSE 1030 is connected to two Bluetooth game controllers 1032 and 1034. Each display device in the vehicle may be physically or logically associated with its corresponding Bluetooth control unit. The wireless interface between each Bluetooth device and the vehicle control unit is managed using BR/EDR (Basic Rate/Enhanced Data Rate) connections, while communication between the ECUs is handled via in-vehicle Ethernet links.

In this distributed ECU architecture, at least one Bluetooth control unit , for example the Bluetooth control unit in the head unit 1010, may be designated as a primary Bluetooth control unit . This primary Bluetooth control unit may act as a clock master, synchronizing timing signals across all Bluetooth control units in the vehicle system to enable coherent operation and a consistent pairing mode across the entire Bluetooth domain. Additionally, a lookup table (see Fig. 9) may be stored locally or maintained in a synchronized manner across the vehicle control units. Each Bluetooth control unit may expose vendor-specific HCI commands to allow connection information, such as Bluetooth device address (BD_ADDR), link key, connection status, and assigned display device, to be pushed or pulled to/from this table. In the case of multiple ECUs, the communication for synchronization may be implemented using standard server-client TCP/IP socket mechanisms to exchange control data across the ECUs.

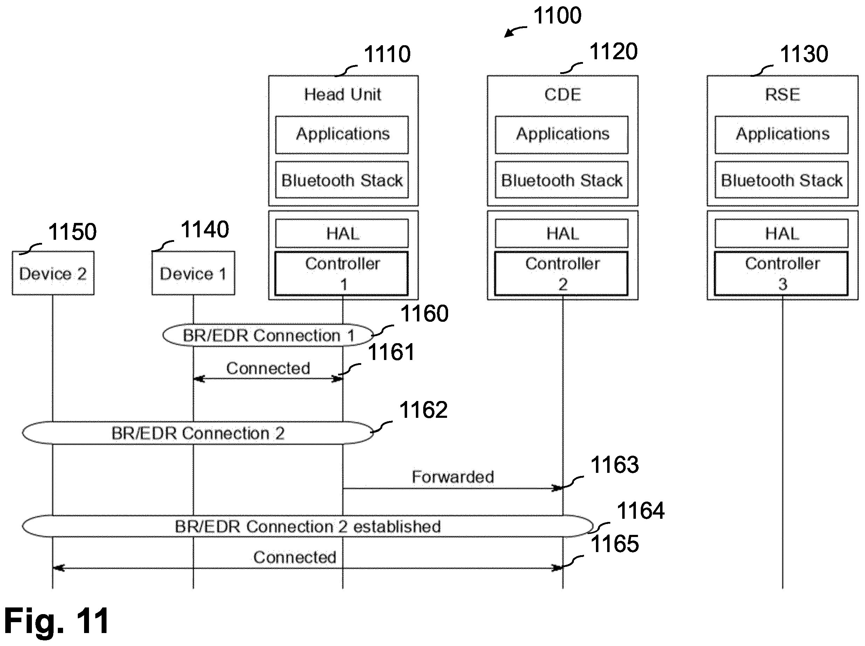

The behavior of the actual connection reassignment at chipset level (e.g., load balancing between Bluetooth control unit s or Bluetooth control unit migration) may remain implementation-dependent, but the ECUs shall expose standardized interfaces to interact with the lookup table logic. This ensures coordination across distributed nodes while preserving transparency to the user. The architecture supports dynamic load balancing (see Fig. 11). When multiple external Bluetooth devices are connected, the system may evaluate current Bluetooth control unit load and distribute new connections to the least congested Bluetooth control unit . This behavior may be automated by the Bluetooth control unit s or guided by decisions made in the upper software layer (e.g., within the application or framework stack of the head unit). This design enables scalable and efficient Bluetooth resource management across a multi-Bluetooth control unit , multi-ECU vehicle system.

Further details and aspects are mentioned in connection with the examples described above or below. The example shown in Fig. 10 may include one or more optional additional features corresponding to one or more aspects mentioned in connection with the proposed concept or one or more examples described above (e.g., Figs. 1-9) or below (e.g., Figs. 11-13).

Fig. 11 illustrates a flow diagram 1100 corresponding to the multi-ECU Bluetooth system of Fig. 10. The diagram demonstrates how Bluetooth communication is handled and dynamically reassigned across different vehicle control units, each comprising its own Bluetooth control unit and processing stack. The system comprises a head unit 1110, a co-driver entertainment unit (CDE) 1120, and a rear-seat entertainment unit (RSE) 1130, each implementing its own Bluetooth stack and a dedicated Bluetooth control unit . The Bluetooth stack within each ECU may include services, profiles, and protocol layers that are executed locally. Each ECU includes a Hardware Abstraction Layer (HAL), which interfaces with its own Bluetooth control unit (Controller 1 in head unit 1110, Controller 2 in CDE 1120, and Controller 3 in RSE 1130).

In step 1160, a first external Bluetooth device 1140 (device 1) initiates a Bluetooth communication request. The request is processed by the head unit 1110, and a BR/EDR (Basic Rate/Enhanced Data Rate) connection is established between the external Bluetooth device 1140 and Controller 1. In step 1161, the connection is considered active, allowing the head unit 1110 to exchange Bluetooth data with device 1. In step 1162, a second external Bluetooth device 1150 (device 2) initiates a separate Bluetooth connection. Initially, this request may also be routed through the head unit 1110. However, based on load-balancing logic or profile-specific constraints, the connection request is forwarded in step 1163 to the co-driver entertainment unit 1120. This transfer is performed over the in-vehicle network (e.g., Ethernet or automotive TCP/IP stack), using coordination logic informed by the unified Bluetooth address architecture. In step 1164, the second Bluetooth connection is re-established on Controller 2 within the CDE 1120. In step 1165, the connection is considered active, and Bluetooth communication continues seamlessly between the second external Bluetooth device 1150 and the co-driver entertainment unit 1120. Despite the handover, the external Bluetooth device 1150 remains paired to the unified Bluetooth address of the vehicle, and no disconnection or user interaction is required.

This setup demonstrates how connection reassignment can be transparently managed across multiple ECUs, each operating independently. The underlying connection logic and Bluetooth address virtualization are abstracted from the user, preserving a seamless experience while optimizing Bluetooth control unit utilization.

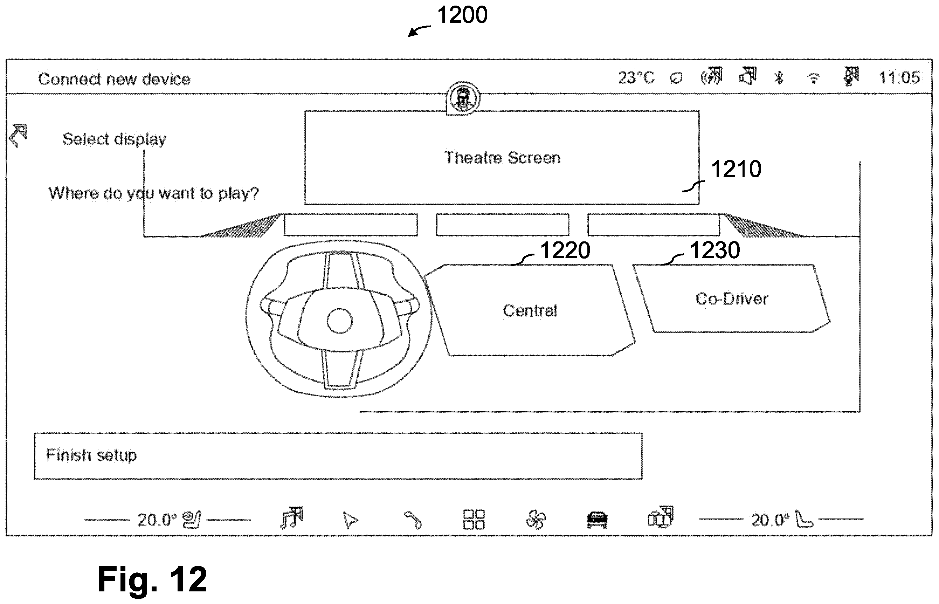

Further details and aspects are mentioned in connection with the examples described above or below. The example shown in Fig. 11 may include one or more optional additional features corresponding to one or more aspects mentioned in connection with the proposed concept or one or more examples described above (e.g., Fig. 10) or below (e.g., Figs. 12-13).

Fig. 12 illustrates an example of a graphical user interface 1200 displayed on a central vehicle display, such as a Central Information Display (CID), for assigning Bluetooth-connected devices to one of several available display devices in the vehicle. The graphical user interface 1200 comprises a visual layout of the vehicle cabin, showing available display targets such as a Theatre Screen 1210, a Central display (CID) 1220, and a Co-Driver display (CDE) 1230. The user interface 1200 includes a selection field for "Connect new device" and a highlighted action area for selecting a target display device. Through this graphical user interface 1200, a user may select to which display a connected Bluetooth device should be logically associated. This may be done independently of the user's physical seating position in the vehicle. For instance, even if a user is seated in the rear, the user may choose to assign a Bluetooth device to the front Central display (CID) or Co-Driver display (CDE). In some examples, the selection may be performed via a drag-and-drop gesture on a touchscreen, such as dragging a Bluetooth headset icon from the RSE to the CID display area 1210. This user interaction triggers a logical reassignment of the display device associated with the Bluetooth device, without requiring a change in the underlying Bluetooth connection or re-pairing. Depending on the system architecture, the associated Bluetooth control unit may remain unchanged or may be dynamically reassigned through internal coordination logic, for instance via a unified Bluetooth address architecture as described above.

The system may determine, based on the user input, which Bluetooth control unit is to handle the connection. For example, if the device is connected from the RSE display, the Bluetooth control unit assigned to the RSE may be considered first for managing the connection. The connection change is initiated at the software layer, preserving the active connection on the protocol level and seamlessly redirecting the data flow to the newly selected display device.

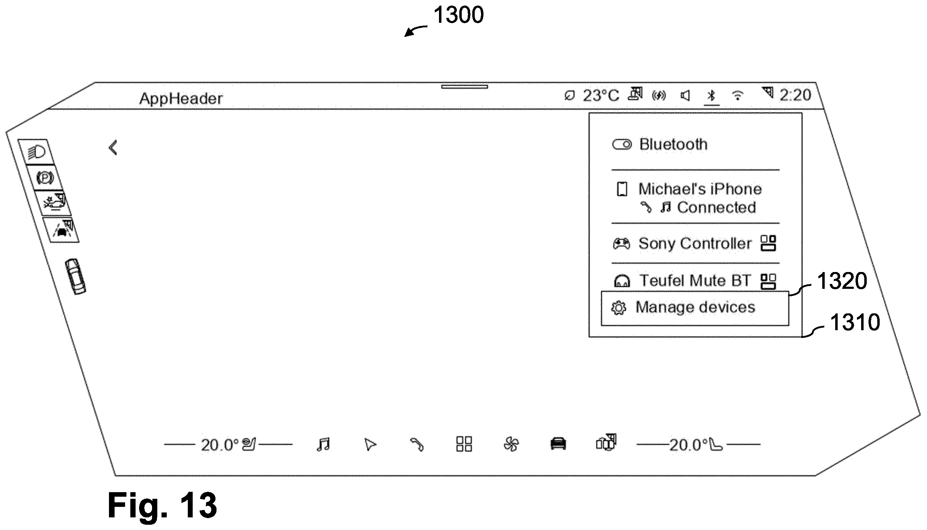

Further details and aspects are mentioned in connection with the examples described above or below. The example shown in Fig. 12 may include one or more optional additional features corresponding to one or more aspects mentioned in connection with the proposed concept or one or more examples described above (e.g., Figs. 1 - 11) or below (e.g., Fig. 13).

**Fig. 13** illustrates a device management interface 1300 presented to the user, for example on the Central Information Display (CID) or any other in-vehicle screen. The interface 1300 provides a summary 1310 of all Bluetooth devices currently known to the vehicle system. Each device entry may include information such as the Bluetooth name, connection status (e.g., connected or disconnected), associated icon representing the device type (e.g., smartphone, game controller), and its assigned display device. For instance, the device list 1310 may show an active connection to "Michael's iPhone," a game controller labeled "Sony Controller," and an audio device such as "Teufel Mute BT." Each of these devices may be associated with a specific Bluetooth control unit and, through system logic, routed to the corresponding display device. The user may manage these devices via a "Manage Devices" button 1320 or equivalent UI element. This interface enables the user to monitor and control active Bluetooth connections across all seats and screens in the vehicle.

The interface 1300 may be used for implementing the flexible reassignment logic described in Fig. 11. For example, when the user triggers a reassignment of a Bluetooth device from one screen to another, the system updates the logical mapping in the internal connection management structure (e.g., lookup table), and may switch the underlying Bluetooth control unit if necessary. However, due to the unified Bluetooth address, the external device continues communication seamlessly, without any awareness of the reassignment.

Further details and aspects are mentioned in connection with the examples described above. The example shown in Fig. 13 may include one or more optional additional features corresponding to one or more aspects mentioned in connection with the proposed concept or one or more examples described above (e.g., Figs. 1 - 12).

### Reference Signs

100 Method
110 Activating the remote control function
120 Detecting the control input
130 Transmitting control input data
140 Controlling the function of the display unit
200 System (centralized architecture)
210 Vehicle control unit / processor circuit
220, 230 Bluetooth control units (centralized system)
300 System (distributed architecture)
310 First vehicle control unit
320 Second vehicle control unit
330, 340 Bluetooth control units (distributed system)
400 Vehicle with centralized system
500 Vehicle with distributed system
600 - System architecture
610 Host system
612 Application layer
614 Framework layer
616 Bluetooth process layer
618 Bluetooth stack
620 Controller (chipset)
622 Controller abstractor layer
624 Controller 1
625 Controller 2
626 Controller 3
700 Vehicle
710 Head unit
720 CID (Central Information Display)
722 Smartphone
730 CDE (Co-Driver Entertainment)
732 Headset
740 RSE (Rear Seat Entertainment)
742, 744 Game controller 1, game controller 2
800 Flow diagram
810 Head unit with unified Bluetooth stack
812 Head unit with multiple Bluetooth stacks
820 Device 1
830 Device 2
840 Step: Device 1 initiates connection
841 Step: Connection active
842 Step: Device 2 initiates connection
843 Step: Connection reassignment
844 Step: Connection re-established
845 Step: Connection active
900 Lookup table
901 Row of the lookup table
902Row of the lookup table
903 Row of the lookup table
911, 912, 913, 914, 915, 916, 917 Columns of the lookup table
1000 Vehicle system
1010 Head unit
1012 Smartphone
1020 CDE (Co-Driver Entertainment)
1022 Headset
1030 RSE (Rear Seat Entertainment)
1032, 1034 Game controller 1, game controller 2
1100 Flow diagram for distributed ECUs
1110 Head unit
1120 CDE
1130 RSE
1140 Device 1
1150 Device 2
1160 Step: Connection 1 started
1161 Step: Connection 1 active
1162 Step: Connection 2 started
1163 Step: Connection forwarded
1164 Step: Connection 2 re-established
1165 Step: Connection 2 active
1200 Display selection interface
1210 Theatre Screen (RSE)
1220 Central Display (CID)
1230 Co-Driver Display (CDE)
1300 Device management interface
1310 Device list
1320 Manage devices button

## Claims

1. A method (100) for managing Bluetooth connections in a vehicle comprising a plurality of Bluetooth control units, the method comprising:
Providing (110) a unified Bluetooth address for the plurality of Bluetooth control units in the vehicle, wherein each of the plurality of Bluetooth control units in the vehicle is assigned to a display device in the vehicle;
Receiving (120) a connection request from an external Bluetooth device for establishing a connection with a first display device in the vehicle by a user;
Establishing (130) a Bluetooth connection between the external Bluetooth device and one of the plurality of Bluetooth control units using the unified Bluetooth address;
Transmitting (140) data between the first display device and the external Bluetooth device via the connected Bluetooth control unit.

2. The method (100) according to claim 1, further comprising:
Receiving a connection request from the external Bluetooth device to switch from the first display device to using of a second display device by the user;
Transmitting data between the second display device and the external Bluetooth device via the connected Bluetooth control unit.

3. The method (100) according to any of the preceding claims, further comprising:
Detecting a change in the seating position of the user in the vehicle, wherein the initial seating position is assigned to the first display device;
Determining a second display device assigned to the new seating position of the user;
Transmitting data between the second display device and the external Bluetooth device via the connected Bluetooth control unit.

4. The method (100) according to any of the preceding claims, further comprising:
Exchanging control information among the plurality of Bluetooth control units;
Coordinating the Bluetooth control units based on the exchanged control information.

5. The method (100) according to claim 4, wherein the control information is exchanged among the plurality of Bluetooth control units via a TCP/IP-based communication network within the vehicle.

6. The method (100) according to any of the preceding claims, further comprising:
Storing connection information of the external Bluetooth device in a data structure;
Updating the data structure when the connection status of the external Bluetooth device changes;
Providing the connection information stored in the data structure for managing the Bluetooth connection within the vehicle system.

7. The method (100) according to claim 6, wherein the connection information comprises at least one of: a unique device address, a link key for authentication of the connection, an index for internal assignment of the external Bluetooth device, a device name for identifying the external Bluetooth device, the activated Bluetooth profiles of the external Bluetooth device, the currently assigned display device of the external Bluetooth device, or the current connection status of the external Bluetooth device.

8. The method (100) according to any of the preceding claims, further comprising: Selecting a Bluetooth control unit from the plurality of Bluetooth control units for establishing a connection with the external Bluetooth device based on operating parameters of the plurality of Bluetooth control units.

9. The method (100) according to claim 8, wherein the selection of the Bluetooth control unit is based on at least one of the following operating parameters: selecting the Bluetooth control unit with the lowest number of connected external Bluetooth devices, selecting the Bluetooth control unit with the lowest current data transmission rate, selecting the Bluetooth control unit with the lowest processor load, or selecting a Bluetooth control unit located in physical proximity to the display device being used.

10. The method (100) according to any of the preceding claims, further comprising:
Monitoring operating parameters of the plurality of Bluetooth control units;
Switching an external Bluetooth device from a first Bluetooth control unit to a second Bluetooth control unit based on the operating parameters of the plurality of Bluetooth control units.

11. The method (100) according to claim 10, wherein the external Bluetooth device is switched from the first Bluetooth control unit to the second Bluetooth control unit if at least one of the following operating parameters is met:
the number of external devices connected to the first Bluetooth control unit exceeds a predefined threshold,
the current data transmission rate of the first Bluetooth control unit reaches a defined maximum capacity,
the processor load of the first Bluetooth control unit exceeds a predefined limit,
or the second Bluetooth control unit has a lower load than the first Bluetooth control unit.

12. A system (200) for managing Bluetooth connections in a vehicle comprising a plurality of Bluetooth control units, comprising:
a plurality of Bluetooth control units (220, 230)
a vehicle control unit (210) configured to:
provide a unified Bluetooth address for the plurality of Bluetooth control units in the vehicle,
wherein each of the plurality of Bluetooth control units in the vehicle is assigned to a display device in the vehicle;
receive a connection request from an external Bluetooth device for establishing a connection with a first display device in the vehicle by a user;
establish a Bluetooth connection between the external Bluetooth device and one of the plurality of Bluetooth control units using the unified Bluetooth address;
and transmit data between the first display device and the external Bluetooth device via the connected Bluetooth control unit.

13. A system (300) for managing Bluetooth connections in a vehicle comprising a plurality of Bluetooth control units, comprising:
a plurality of Bluetooth control units (330, 340);
a plurality of vehicle control units (310, 320) configured to;
a first vehicle control unit (310) configured to:
provide a unified Bluetooth address for the plurality of Bluetooth control units in the vehicle,
wherein each of the plurality of Bluetooth control units in the vehicle is assigned to a display device in the vehicle;
a second vehicle control unit (320) configured to:
receive a connection request from an external Bluetooth device for establishing a connection with a second display device in the vehicle by a user;
establish a Bluetooth connection between the external Bluetooth device and a second Bluetooth control unit using the unified Bluetooth address;
and transmit data between the second display device and the external Bluetooth device via the connected second Bluetooth control unit

14. A vehicle (400) comprising the system (200) of claim 12 or the system (300) of claim 13.
